# EUROPEAN PATENT SPECIFICATION

(11) **EP 1 439 335 B1**
(45) Date of publication and mention of the grant of the patent: **14.09.2005**
(21) Application number: 04009599.4
(22) Date of filing: 09.07.2001
(51) Int. Cl.: F16H 61/12

(54) **Transmission for a vehicle and method of controlling the same**
Fahrzeuggetriebe und Verfahren zu dessen Steuerung
Transmission pour un véhicule et méthode pour la commander

(30) Priority: 31.07.2000 JP 2000231143
(43) Date of publication of application: 21.07.2004
(62) Divisional of application: 01116546.1
(73) Proprietor: Toyota Jidosha Kabushiki Kaisha, Toyota-shi, Aichi-ken 471-8571 (JP)
(72) Inventor: Ogawa, Shinji, Toyota-shi Aichi-ken, 471-8571 (JP); Suga, Shojiro, Toyota-shi Aichi-ken, 471-8571 (JP); Ohi, Takao, Toyota-shi Aichi-ken, 471-8571 (JP); Watanabe, Atsushi, Toyota-shi Aichi-ken, 471-8571 (JP); Yamamoto, Kazuhiro, Toyota-shi Aichi-ken, 471-8571 (JP); Yoshikawa, Katsuhisa, Toyota-shi Aichi-ken, 471-8571 (JP); Nakao, Michiaki, Toyota-shi Aichi-ken, 471-8571 (JP)
(74) Representative: TBK-Patent

(56) References cited:
- EP-A- 0 798 497
- GB-A- 2 191 875
- GB-A- 2 232 453
- PATENT ABSTRACTS OF JAPAN vol. 2000, no. 05, 14 September 2000 (2000-09-14) & JP 2000 055184 A (HITACHI LTD), 22 February 2000 (2000-02-22)
- PATENT ABSTRACTS OF JAPAN vol. 012, no. 134 (M-689), 23 April 1988 (1988-04-23) & JP 62 255642 A (ISUZU MOTORS LTD), 7 November 1987 (1987-11-07)

## Description

### BACKGROUND OF THE INVENTION

### 1. Field of the Invention

The invention relates to a transmission exclusively using a clutch for connecting to an engine of a vehicle, and more particularly, to a control device of such a transmission which performs gear-change automatically using a clutch actuator, a shift actuator and a select actuator.

### 2. Description of Related Art

Control devices designed to control a vehicular transmission that is provided in a power transmission path between a prime mover and driving wheels are known. In one of such control devices, various elements such as an automatic clutch and/or a transmission and the like are controlled automatically by an electronic control unit via various actuators, whereby some or all of a series of gear-change operations are performed automatically. One such device has been proposed in which an emergency manual operation member capable of releasing and engaging the automatic clutch or performing gear-change of the transmission manually if the elements have become unable to be controlled automatically due to inconveniences of the electronic control unit or the actuators is provided as emergency back-up means and wherein the emergency manual operation member is used effectively when the vehicle is stopped. For example, such a device is disclosed in Patent Publication No. 2820732.

However, the aforementioned control device according to the related art can take measures against only a limited number of inconveniences and requires operation of the manual operation member to take measures against abnormalities of a certain type. Thus, such a control device is difficult to handle especially for a driver who has driven only vehicles equipped with an automatic transmission or who can drive only vehicles equipped with an automatic transmission.

EP 0 798 497 discloses a transmission for a vehicle according to the preamble of claim 1 and a method of contolling a transmission according to claim 2.

### SUMMARY OF THE INVENTION

The invention has been made as a solution to the problem described above. It is an object of the invention to provide a control device for transmission and a method of controlling automatic transmission in which some or all of gear-change operations are performed automatically with a control device that can automatically take measures against a not-normal state.

The object is solved by the features of claims 1 and 2.

According to a further solution of the object of the invention there is provided a method, wherein the control device determines that the vehicle is not in a normal running state if a rotational speed (V_{W1}) of a right non-driving wheel is lower than a first reference value (V₁), if a rotational speed (V_{W2}) of a left non-driving wheel is lower than a second reference value (V₂), and if a rotational speed (V_{W3}) of a right driving wheel is higher than a third reference value (V₃) or if a rotational speed (V_{W4}) of a left driving wheel is higher than a fourth reference value (V₄).

### BRIEF DESCRIPTION OF THE DRAWINGS

The objects, features, advantages, technical and industrial significance of this invention will be better understood by reading the following detailed description of preferred embodiments of the invention, when considered in connection with the accompanying drawings, in which:
Fig. 1 is a skeleton diagram showing an overall construction of a vehicular driving unit to which control devices according to embodiments of the invention are applied;

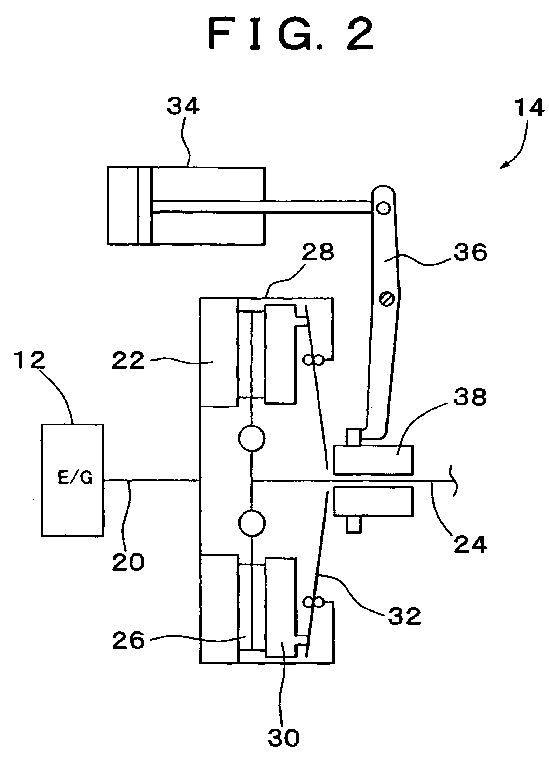

Fig. 2 is an illustrative view of a construction of an automatic clutch of the vehicular driving unit shown in Fig. 1;
Fig. 3 is an illustrative view of a hydraulic control circuit for controlling operation of the automatic clutch and a transmission shown in Fig. 1;
Fig. 4 illustrates how a driving control hydraulic pressure that is regulated by a pressure-regulating valve shown in Fig. 3 to set an appropriate shift load changes in a shift period of the transmission shown in Fig. 1;
Fig. 5 is a block diagram illustrating a control system of the vehicular driving unit shown in Fig. 1;
Fig. 6 is a perspective view illustrating a shift lever that is employed in the vehicular driving unit shown in Fig. 1;
Fig. 7 is a functional block diagram illustrating the essence of a control function of a transmission electronic control unit according to a first embodiment of the invention;
Fig. 8 is a flowchart illustrating the essence of control operation of the transmission electronic control unit according to the first embodiment of the invention;
Fig. 9 is a functional block diagram illustrating the essence of a control function of a transmission electronic control unit according to a second embodiment of the invention and corresponds to Fig. 7;
Fig. 10 is a flowchart illustrating the essence of control operation of the transmission electronic control unit according to the second embodiment of the invention;
Fig. 11 is a functional block diagram illustrating the essence of a control function of a transmission electronic control unit according to a third embodiment of the invention and corresponds to Fig. 7;
Fig. 12 is a flowchart illustrating the essence of control operation of the transmission electronic control unit according to the third embodiment of the invention;
Fig. 13 is a functional block diagram illustrating the essence of a control function of a transmission electronic control unit according to a fourth embodiment of the invention and corresponds to Fig. 7;
Fig. 14 is a flowchart illustrating the essence of control operation of the transmission electronic control unit according to the fourth embodiment of the invention;
Fig. 15 is a flowchart illustrating operation of normal pressure accumulation control shown in Fig. 14;
Fig. 16 is a functional block diagram illustrating the essence of a control function of a transmission electronic control unit according to a fifth embodiment of the invention and corresponds to Fig. 7;
Fig. 17 is a flowchart illustrating the essence of control operation of the transmission electronic control unit according to the fifth embodiment of the invention;
Fig. 18 is a functional block diagram illustrating the essence of a control function of a transmission electronic control unit according to a sixth embodiment of the invention and corresponds to Fig. 7; and
Fig. 19 is a flowchart illustrating the essence of control operation of the transmission electronic control unit according to the sixth embodiment of the invention;

### DETAILED DESCRIPTION OF PREFERRED EMBODIMENTS

In the following description and the accompanying drawings, the invention will be described in more detail with reference to exemplary, preferred embodiments.

Hereinafter, embodiments of the invention will be described in detail with reference to the drawings.

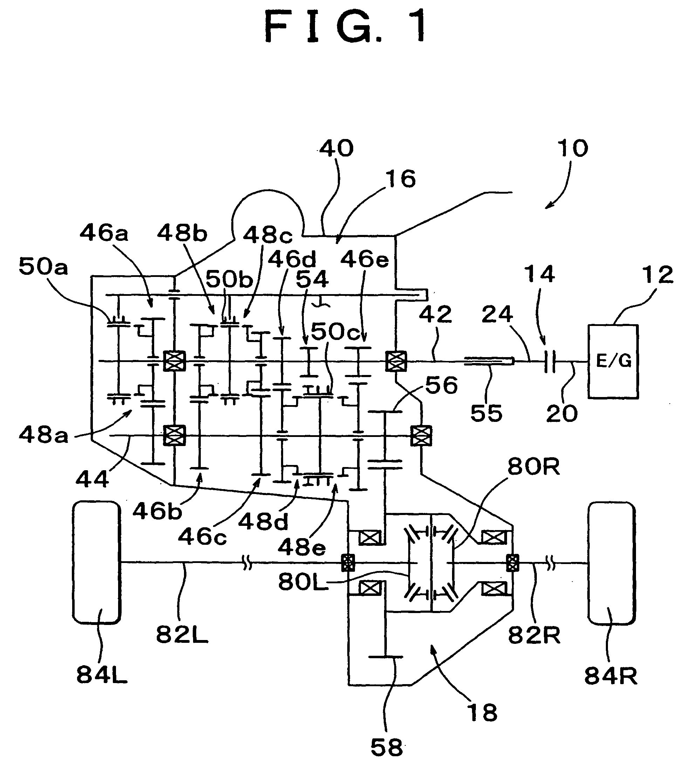

Fig. 1 is a skeleton diagram illustrating an overall construction of a vehicular driving unit 10 to which control devices according to the embodiments of the invention are applied. Although this vehicular driving unit is designed for an FF (front-engine front-drive) vehicle or an MR (mid-engine rear-drive) vehicle, it is applicable not only to the FF or MR vehicle but also to an FR (front-engine front-drive) vehicle and an RR (rear-engine rear-drive) vehicle. Referring to Fig. 1, the vehicular driving unit 10 has an engine 12 as a prime mover or a traction drive source, an automatic clutch 14, a transmission 16, and a differential 18. The automatic clutch 14 is for example a friction clutch made of a single dry plate, and includes a flywheel 22 fitted to a crankshaft 20 of the engine 12, a clutch disc 26 disposed on a clutch output shaft 24, a pressure plate 30 disposed in a clutch housing 28, a diaphragm spring 32 that clamps the clutch disc 26 by urging the pressure plate 30 toward the flywheel 22 and that transmits power, and a release sleeve 38 that displaces an inner end portion of the diaphragm spring 32 to the left in Fig. 1 by being displaced to the left in Fig. 1 by a clutch release cylinder 34 via a release fork 36 and that releases (disengages) clutches.

The transmission 16 is disposed in a common housing 40 together with the differential 18 to constitute a part of a transaxle, and is soaked in a selected amount of lubricating oil filling the housing 40 so as to be lubricated together with the differential 18. The transmission 16 has a two-parallel-shaft normal-engaged transmission mechanism (a) and a shift-select shaft (b) (not shown), and is capable of establishing five forward gear-change stages. The two-parallel-shaft normal-engaged transmission mechanism (a) has a plurality of normally engaged gear-change gear pairs 46a to 46e that are different in gear ratio from one another disposed between an input shaft 42 and an output shaft 44 that are parallel to each other, and is provided with a plurality of engagement clutches 48a to 48e that have synchro-meshes and that correspond to the gear-change gear pairs 46a to 46e respectively. The shift-select shaft (b) changes over gear-change stages by selectively displacing one of three clutch hub sleeves 50a, 50b and 50c of the engagement clutches 48a to 48e. Furthermore, a pair of backward gears 54 are disposed on the input shaft 42 and the output shaft 44 and are engaged with a backward idling gear disposed on a countershaft (not shown), thus establishing a backward gear-change stage. The input shaft 42 is connected to the clutch output shaft 24 of the automatic clutch 14 by means of spline fitting 55. An output gear 56 is disposed on the output shaft 44 and is engaged with a ring gear 58 of the differential 18.

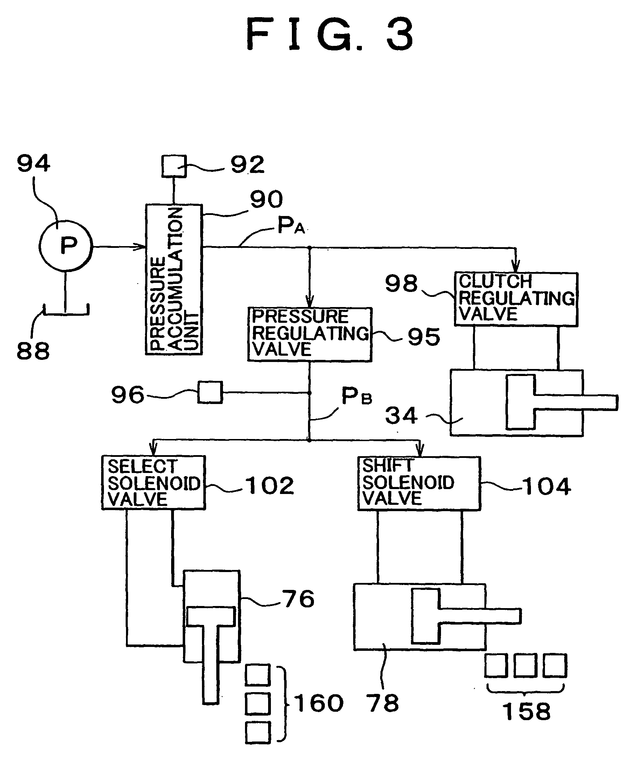

The clutch hub sleeve 50b is common to the engagement clutches 48b, 48c, whereas the clutch hub sleeve 50c is common to the engagement clutches 48d, 48e. The shift-select shaft (not shown) is disposed in such a manner as to be rotatable around its axial center and axially displaceable, and is positioned by a select cylinder 76 (see Fig. 3) at three axial positions, i.e., a first select position allowing engagement with the clutch hub sleeve 50, a second select position allowing engagement with the clutch hub sleeve 50b, and a third select position allowing engagement with the clutch hub sleeve 50a. Further, the shift-select shaft is positioned by a shift cylinder 78 (see Fig. 3) at three rotational positions, i.e., a neutral center position (as shown in Fig. 1) where all of the engagement clutches 48a to 48e are disengaged and where the backward gear-change stage is not established, a first shift position on one side around the axial center (on the right side in Fig. 1), and a second shift position on the other side around the axial center (on the left side in Fig. 1). When the shift-select shaft is at the neutral position, it assumes a power transmission shut-off state where power transmission between the input shaft 42 and the output shaft 44 is shut off.

When the shift-select shaft is at the first select position and at the first shift position, the engagement clutch 48e is connected, whereby a first gear-change stage with the greatest gear-change ratio e (= rotational speed N_{IN} of the input shaft 42/rotational speed N_{OUT} of the output shaft 44) is established. When the shift-select shaft is at the first select position and at the second shift position, the engagement clutch 48d is connected, whereby a second gear-change stage with the second greatest gear-change ratio e is established. When the shift-select shaft is at the second select position and at the first shift position, the engagement clutch 48c is connected, whereby a third gear-change stage with the third greatest gear-change ratio e is established. When the shift-select shaft is at the second select position and at the second shift position, the engagement clutch 48b is connected, whereby a fourth gear-change stage with the fourth greatest gear-change ratio e is established. The gear-change ratio e of the fourth gear-change stage is substantially equal to 1. When the shift-select shaft is at the third select position and at the first shift position, the engagement clutch 48a is connected, whereby a fifth gear-change stage with the smallest gear-change ratio e is established. When the shift-select shaft is at the third select position and at the second shift position, the backward gear-change stage is established.

The differential 18 is of a bevel gear type wherein drive shafts 82R, 82L are connected to side gears 80R, 80L respectively through spline fitting or the like so as to rotationally drive left-front and right-front wheels (driving wheels) 84R, 84L or rear-front and rear-right wheels (driving wheels) 84R, 84L respectively.

Fig. 3 shows, as an example, a hydraulic control circuit for gear-change in the transmission 16 and the automatic clutch 14. A hydraulic pump 94 is a motor pump integrated with a drive motor (not shown) and force-feeds hydraulic fluid that has been recirculated to an oil pan or an oil tank 88 to a pressure accumulation unit 90. The pressure accumulation unit 90 is fitted with an original pressure (accumulator pressure) sensor 92. If a pressure P_{A} (also called "original pressure" or "hydraulic pressure") detected by the original pressure sensor 92 drops below a predetermined lower limit value P₀, the hydraulic pump 94 is driven by a later-described transmission electronic control unit 116 via a driving circuit (not shown). If the pressure P_{A} rises above a predetermined normal upper limit value P₁, the hydraulic pump 94 is stopped from being driven. The hydraulic pressure P_{A} in the pressure accumulation unit 90 is supplied to a clutch solenoid valve 98 and a pressure regulating valve 95, and thus corresponds to original pressures in the shift cylinder 78 and the select cylinder 76 that perform gear-change of the transmission 16 and in the clutch release cylinder 34 that drives the automatic clutch 14.

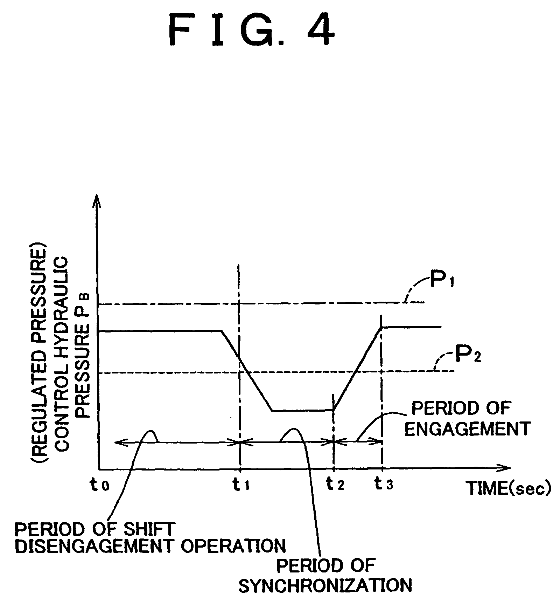

The clutch solenoid valve 98 engages or releases the automatic clutch 14 in accordance with a command from the transmission electronic control unit 116. The pressure regulating valve 95 supplies a select solenoid valve 102 and a shift solenoid valve 104 with a gear-change-drive control hydraulic pressure P_{B} that has been regulated in accordance with a command from the transmission electronic control unit 116. The control hydraulic pressure P_{B} detected by a control hydraulic pressure sensor 96 that is provided on the output side of the pressure regulating valve 95 is regulated by the transmission electronic control unit 116 in a transiently changing manner e.g. as shown in Fig. 4 based on a throttle opening, a gear stage, an upshift, a downshift, an oil temperature and the like, so as to make a shift load applied to the synchro-meshes appropriate and abate noise.

A select cylinder 76 for axially reciprocating the shift-select shaft (not shown) and a shift cylinder 78 for rotating the shift-select shaft (not shown) around its axial center function as gear-change actuators. They are operated to perform shift operation or select operation by means of the shift solenoid valve 104 and the select solenoid valve 102 that are controlled by the transmission electronic control unit 116. The select position selected by axial displacement of the shift-select shaft is detected by a select position sensor 160, and the shift position selected by rotation of the shift-select shaft around its axial center is detected by a shift position sensor 158. The select cylinder 76 selectively connects the shift-select shaft (not shown) to one of shift forks engaging the clutch hub sleeves 50a, 50b and 50c, e.g. by axially displacing the shift-select shaft (not shown). The shift cylinder 78 displaces one of the clutch hub sleeves 50a, 50b and 50c to its engagement position or its neutral position, e.g. by rotationally displacing the shift-select shaft (not shown) to one of the three positions, i.e., the shift positions and the neutral center position therebetween.

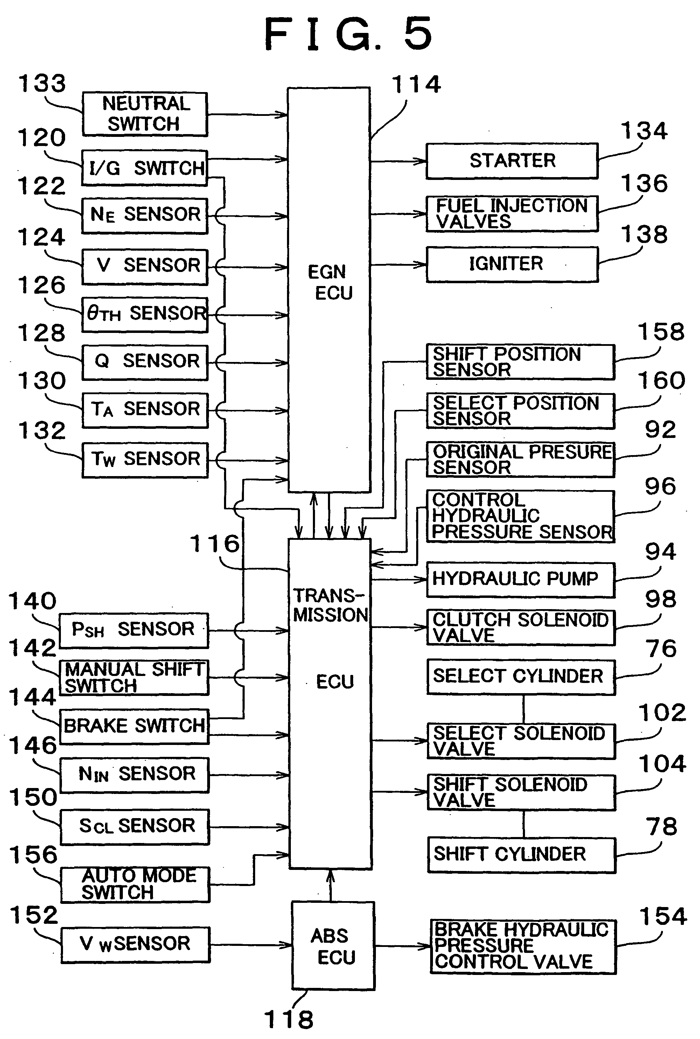

Fig. 5 is a block diagram illustrating an electric control system of the vehicular driving unit 10 of the invention. An engine electronic control unit (ECU) 114, the transmission electronic control unit (ECU) 116, and an ABS (antilock brake system) electronic control unit (ECU) 118 exchange required information therebetween via communication lines. Each of the ECUs 114, 116 and 118 includes a microcomputer and performs signal processings according to a program prestored in a ROM while utilizing a temporary memory function of a RAM. It is also possible to employ a rewritable ROM for a memory function and rewrite it as the necessity arises. An ignition switch 120, an engine speed (NE) sensor 122, a vehicle speed (V) sensor 124, a throttle opening (θ_{TH}) sensor 126, an intake air amount sensor (Q) 128, an intake air temperature (T_{A}) sensor 130, an engine coolant temperature (T_{W}) sensor 132, a neutral switch 133, a brake switch 144, and the like are connected to the engine ECU 114. Signals indicative of an operation position of the ignition switch 120, an engine speed NE, a vehicle speed V (that corresponds to a rotational speed N_{OUT} of the output shaft 44), a throttle opening θ_{TH}, an intake air amount Q, an intake air temperature (outside air temperature) T_{A}, an engine coolant temperature T_{W}, an operation position of the neutral switch 133, an operation position of the brake switch 144, and the like are supplied to the engine ECU 114. In accordance with these signals, the engine ECU 114 starts the engine 12 by rotationally driving a starter (electric motor) 134, controls fuel injection amounts and fuel injection periods of fuel injection valves 136, and controls an ignition period of an ignition plug by means of an igniter 138. The ignition switch 120 has an "ON" position and a "start" position. If the ignition switch 120 is switched to the "start" position, the engine ECU 114 activates the starter 134 and starts the engine 12.

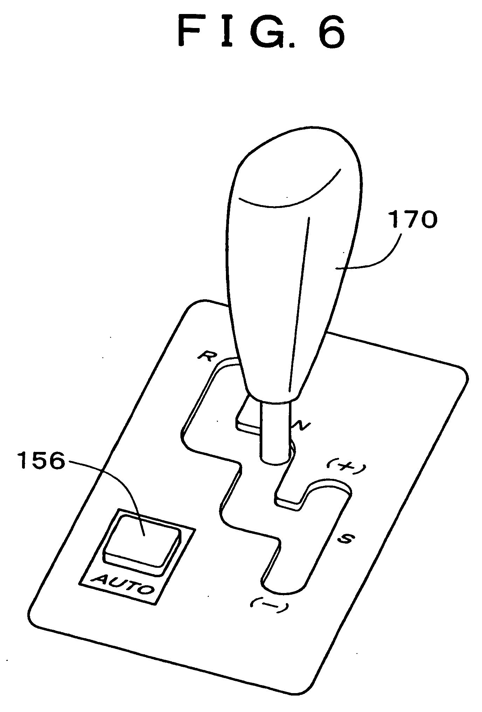

The original pressure sensor 92, the control hydraulic pressure sensor 96, the ignition switch 120, a lever position (P_{SH}) sensor 140, a manual shift switch 142, the brake switch 144, an input speed (N_{IN}: rotational speed of the input shaft 42) sensor 146, a clutch stroke (S_{CL}) sensor 150, an auto mode switch 156, the shift position sensor 158, the select position sensor 160, and the like are connected to the transmission ECU 116. Signals indicative of an original pressure P_{A}, a control hydraulic pressure P_{B}, an operation position of the ignition switch 120, a lever position P_{SH} representing an operation range of a shift lever 170 (see Fig. 6), an upshift (+) and a downshift (-) resulting from manual shift, the turning on and off of a brake, an input speed N_{IN}, a stroke of the automatic clutch 14, i.e., a stroke S_{CL} of the clutch release cylinder 34, the turning on and off of the auto mode switch 156, a shift position, i.e., a rotational position of the shift-select shaft (not shown) that is driven by the shift cylinder 78, a select position, i.e., an axial position of the shift-select shaft (not shown) that is driven by the select cylinder 76, and the like are supplied to the transmission ECU 116. In accordance with these signals and necessary signals captured from the engine ECU 114 and the ABS ECU 118, the transmission ECU 116 controls operation of the hydraulic pump 94, performs gear-change control (including forward-backward switch-over control) of the transmission 16 by switching over operation states of the select cylinder 76 and the shift cylinder 78 through switch-over control of the pressure regulating valve 95, the select solenoid valve 102 and the shift solenoid valve 104, and controls engagement and disengagement of the automatic clutch 14 during gear-change by switching an operation state of the clutch release cylinder 34 through switch-over control of the clutch solenoid valve 98.

The shift lever 170 is disposed e.g. beside a driver's seat and is selectively operated to be positioned in one of three operation ranges, i.e., an "R" range, an "N" range and an "S" range as shown in Fig. 6. The lever position sensor 140 detects the operation range e.g. by means of a plurality of slide switches, a plurality of ON-OFF switches disposed in the operation ranges, or the like. If the shift lever 170 is moved to the "R" range, the transmission 16 is switched to the backward gear-change stage. If the shift lever 170 is shifted to the "N" range, the transmission 16 is switched to the power transmission shut-off state. The "R" range and the "N" range correspond to a reverse range and a neutral range respectively. If an auto mode has been selected by the auto mode switch 156, performance of gear-change is determined based on an accelerator opening (throttle opening) and an actual vehicle speed V using a gear-change diagram (not shown), whereby the transmission 16 is shifted automatically. The "S" range is a manual shift range. A "(+)" position and a "(-)" position are provided above and below the "S" range respectively, that is, at front and rear positions with respect to the vehicle. If a manual mode has been selected and if the shift lever 170 has been moved to the "(+)" position or the "(-)" position, this movement is detected by the manual shift switch 142. Thus, the transmission 16 is upshifted or downshifted among the forward gear-change stages. The "(+)" position is an up-position. Every time the shift lever 170 is moved to the "(+)" position, the gear-change stage is upshifted, i.e., shifted to a next higher gear-change stage with a smaller gear-change ratio e. On the other hand, the "(-)" position is a down-position. Every time the shift lever 170 is moved to the "(-)" position, the gear-change stage is downshifted, i.e., shifted to a next lower gear-change stage with a greater gear-change ratio e. Although not shown, a similar manual shift switch is disposed on a steering wheel. By pressing the manual shift switch, the gear-change stage can be upshifted or downshifted.

In Fig. 5, signals indicative of wheel speeds V_{W} are supplied to the ABS ECU 118 from wheel speed (V_{W}) sensors 152 disposed in four wheels respectively. The ABS ECU 118 detects the presence or absence of slip by comparing the wheel speeds V_{W} with one another, controls a brake hydraulic control valve 154, and controls brake hydraulic pressures for the wheels so as to reduce an amount of slip. Otherwise, the ABS ECU 118 determines that the wheel speed (V_{W}) sensors 152 are in confrontation with a failure (are not normal).

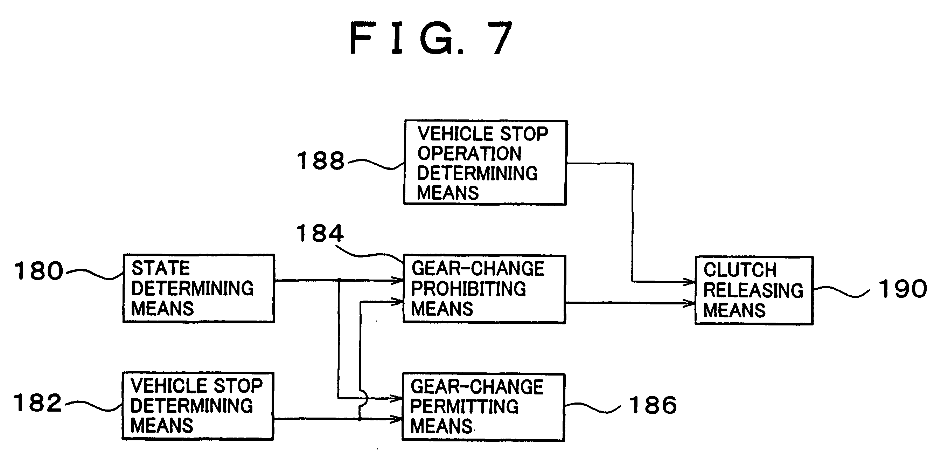

The foregoing description is common to all the embodiments, i.e., the first to sixth embodiments of the invention that will be described hereinafter. Now the features characteristic of each of the embodiments will be described in order. First of all, the first embodiment will be described. Fig. 7 is a functional block diagram illustrating the essence of a control function of the transmission electronic control unit according to the first embodiment. If mechanical or electric devices associated with automatic gear-change of the transmission 16, especially sensor groups (the shift position sensor 158 and the select position sensor 160) and wirings among the sensors or the electronic control units are not normal, the transmission electronic control unit 116 prohibits gear-change of the transmission 16 automatically when the vehicle is not stopped, i.e., when the vehicle is running. The transmission electronic control unit 116 permits gear-change of the transmission 16 when the vehicle is stopped. For this purpose, the transmission electronic control unit 116 has state determining means 180, vehicle stop determining means 182, gear-change prohibiting means 184, gear-change permitting means 186, vehicle stop operation determining means 188, and clutch releasing means 190.

The state determining means 180 determines whether or not control devices for automatic gear-change, i.e., devices associated with automatic gear-change of the transmission 16 (hardware components such as the automatic clutch 14, the clutch release cylinder 34, the select cylinder 76, the shift cylinder 78 and the like), sensors designed as input-signal-type elements for electric control of the transmission 16 (the shift position sensor 158 and the select position sensor 160), output-signal-type elements such as the clutch solenoid valve 98, the pressure regulating valve 95, the select solenoid valve 102 and the shift solenoid valve 104, and wirings among the sensors and among the electronic control units are not normal. The vehicle stop determining means 182 determines whether or not the vehicle is stopped or running at an extremely low speed, e.g. by determining whether or not the vehicle speed V is lower than a reference vehicle speed V₁ that has been preset e.g. as 3km/h. The gear-change prohibiting means 184 prohibits gear-change of the transmission 16 as long as the state determining means 180 determines that the automatic gear-change devices for the transmission 16 are not normal and as long as the vehicle stop determining means 182 determines that the vehicle is not stopped or that the vehicle is not running at an extremely low speed that is lower than the reference vehicle speed V₁. This prevents gear-change from being performed against the intention of a driver while the vehicle is running. If the state determining means 180 determines that the automatic gear-change control devices for the transmission 16 are not normal but if the vehicle stop determining means 182 determines that the vehicle is stopped or that the vehicle is running at an extremely low speed, the gear-change permitting means 186 permits gear-change of the transmission 16 exclusively e.g. between a neutral gear stage and a first gear stage (a second gear stage if the occasion demands) or between the neutral gear stage and a backward gear stage, thus quickly enabling the vehicle to retreat.

The vehicle stop operation determining means 188 determines that vehicle stop operation has been performed by a driver e.g. by releasing an accelerator pedal. If the gear-change prohibiting means 184 prohibits gear-change and if the vehicle stop operation determining means 188 determines that vehicle stop operation has been performed by the driver, the clutch releasing means 190 reduces an engagement force applied to the automatic clutch 14 and substantially releases the automatic clutch 14, thus preventing engine stall.

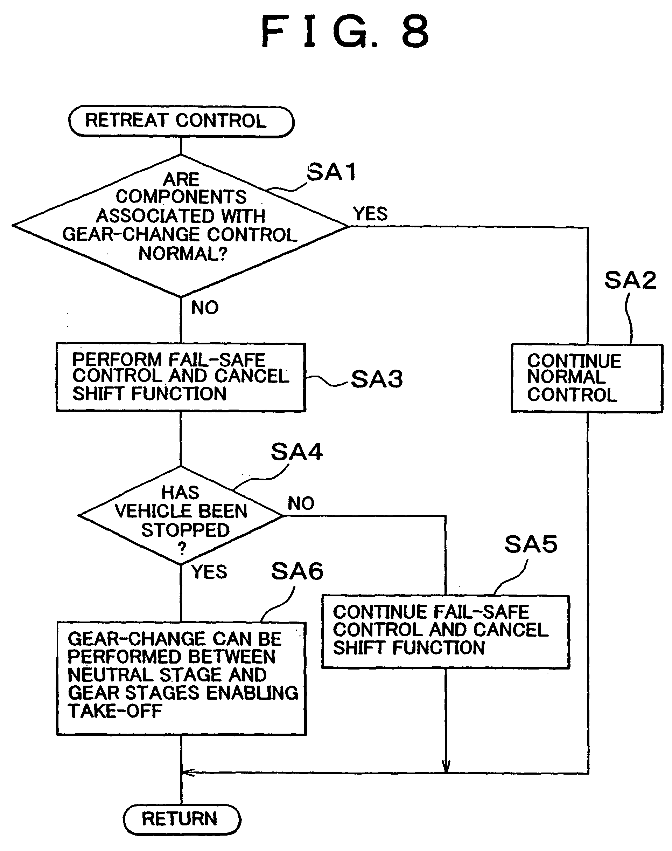

Fig. 8 is a flowchart illustrating the essence of control operation of the transmission electronic control unit 116, i.e., a retreat control routine. In a step SA1 (the term "step" will be omitted hereinafter) corresponding to the state determining means 180, it is determined whether or not the automatic gear-change control devices for the transmission 16 are normal. If the result of SA1 is positive, normal control is continued in SA2 and then the present routine is terminated. During normal control, even when a manual gear-change mode is selected, if the vehicle reaches a low speed equal to or lower than e.g. 8km/h, the automatic clutch 14 is released automatically and the transmission 16 is shifted to the first gear stage automatically.

However, if the result in SA1 is negative, fail-safe control is performed in SA3 and a shift function of the transmission 16 is turned off. Next, in SA4 corresponding to the vehicle stop determining means 182, it is determined whether or not the vehicle is stopped, by determining whether or not the vehicle speed V is lower than the reference vehicle speed V₁. If the result in SA4 is negative, fail-safe control is continued, the shift function is turned off, and gear-change of the transmission 16 is substantially prohibited in SA5 corresponding to the gear-change prohibiting means 184. However, if the result in SA4 is positive, gear-change is permitted exclusively between take-off gear stages such as the first gear stage and the backward gear stage and the neutral stage or between the second gear stage and the neutral stage in the case of a snow mode, in SA6 corresponding to the gear-change permitting means 186.

As described above, according to the first embodiment, if the automatic gear-change control devices for the transmission 16 are not normal, i.e., if the devices associated with automatic gear-change of the transmission 16 (hardware components such as the automatic clutch 14, the clutch release cylinder 34, the select cylinder 76, the shift cylinder 78 and the like), the sensors designed as input-signal-type elements for electric control of the transmission 16 (the shift position sensor 158 and the select position sensor 160), output-signal-type elements such as the clutch solenoid valve 98, the pressure regulating valve 95, the select solenoid valve 102 and the shift solenoid valve 104, and the wirings among the sensors and among the electronic control units are not normal, gear-change is prohibited automatically while the vehicle is running. Thereby gear-change is prevented from being performed against the intention of a driver. Also, since gear-change is permitted automatically after the vehicle has been stopped, the vehicle is allowed to restart quickly.

Next, the second embodiment of the invention will be described. In the second embodiment, components substantially identical with those of the first embodiment are denoted by the same reference numerals and detailed description thereof will be omitted.

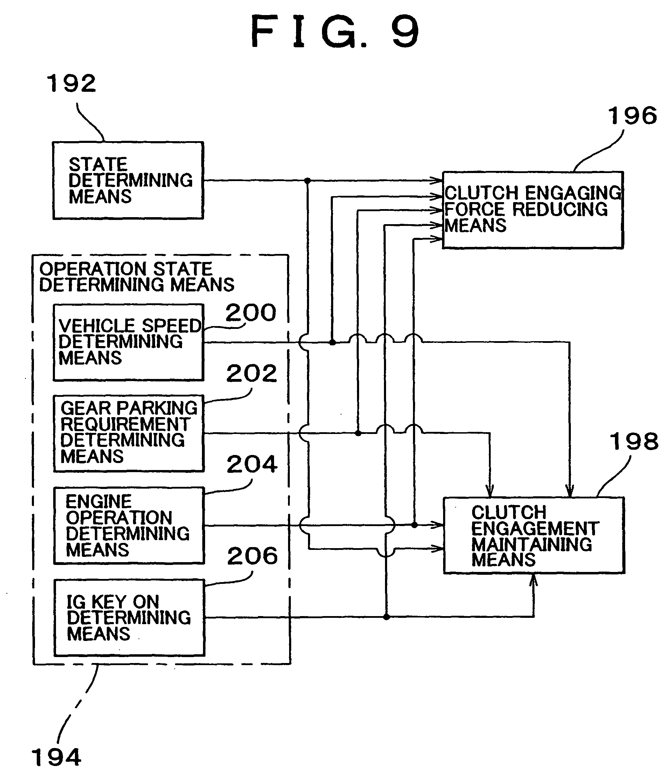

Fig. 9 is a functional block diagram illustrating the essence of a control function of the transmission electronic control unit 116 according to the second embodiment of the invention. If a certain gear stage has been established and cannot be canceled because a shift control device that is provided in the transmission 16 to perform automatic gear-change of the transmission 16 is not normal, the transmission electronic control unit 116 of the second embodiment reduces an engagement force applied to the automatic clutch 14 in a predetermined running state of the vehicle and substantially releases the automatic clutch 14. For this purpose, the transmission electronic control unit 116 has state determining means 192, operation state determining means 194, clutch engagement force reducing means 196, and clutch engagement maintaining means 198.

The state determining means 192 determines whether or not at least one of components of a shift-select mechanism including the shift control device, i.e., a shift-select shaft (not shown) provided in the transmission 16 to engage and disengage gears of the transmission 16, a synchro-mesh operated by the shift-select shaft via a shift fork, the select cylinder 76 driving the shift-select shaft (not shown), the shift cylinder 78, and the like, or at least one of components other than those of the automatic clutch control device is not normal. The operation state determining means 194 includes vehicle speed determining means 200, gear parking requirement determining means 202, engine operation determining means 204, and IG-key ON determining means 206. The vehicle speed determining means 200 determines whether or not the vehicle is running at a low speed equal to or lower than e.g. 15km/h. The gear parking requirement determining means 202 determines whether or not a gear parking requirement state with an ignition key turned off has been established in a state where the shift lever 170 has been moved to the S (manual shift range) position or the R (reverse range) position and where it is anticipated that a gear will be engaged in the transmission 16. The engine operation determining means 204 determines whether or not the engine 12 is in operation. The IG key ON determining means 206 determines that the ignition key has been turned on.

If the vehicle speed determining means 200 determines that the vehicle is running at a low speed equal to or lower than e.g. 15km/h and if the gear parking requirement determining means 202 determines that a gear parking requirement state has not been established, the clutch engagement force reducing means 196 reduces an engagement force applied to the automatic clutch 14 and substantially releases the automatic clutch 14 so as to avoid a shock resulting from engine stall, even if the fifth gear stage cannot be canceled. If the vehicle speed determining means 200 determines that the vehicle is running at a speed equal to or higher than e.g. 15km/h, if the engine operation determining means 204 determines that the engine 12 is out of operation, and if the IG key ON determining means 206 determines that the ignition key has been turned on, the clutch engagement force reducing means 196 reduces an engagement force applied to the automatic clutch 14 and substantially releases the automatic clutch 14 so as to allow the vehicle to be displaced by being pushed by hands.

If the vehicle speed determining means 200 determines that the vehicle is running at a low speed equal to or lower than e.g. about 15km/h and if the gear parking requirement determining means 202 determines that a gear parking requirement state has been established, the clutch engagement maintaining means 198 maintains engagement of the automatic clutch 14 so as to realize gear parking. If the vehicle speed determining means 200 determines that the vehicle is running at a speed equal to or higher than e.g. 15km/h and if the engine operation determining means 204 determines that the engine 12 is in operation, the clutch engagement maintaining means 198 maintains engagement of the automatic clutch 14 so as to ensure that the vehicle runs smoothly. Furthermore, if the vehicle speed determining means 200 determines that the vehicle is running at a speed equal to or higher than e.g. 15km/h, if the engine operation determining means 204 determines that the engine 12 is out of operation, and if the IG key ON determining means 206 determines that the ignition key has not been turned on, the clutch engagement maintaining means 198 maintains engagement of the automatic clutch 14 so as to prevent the vehicle from rolling.

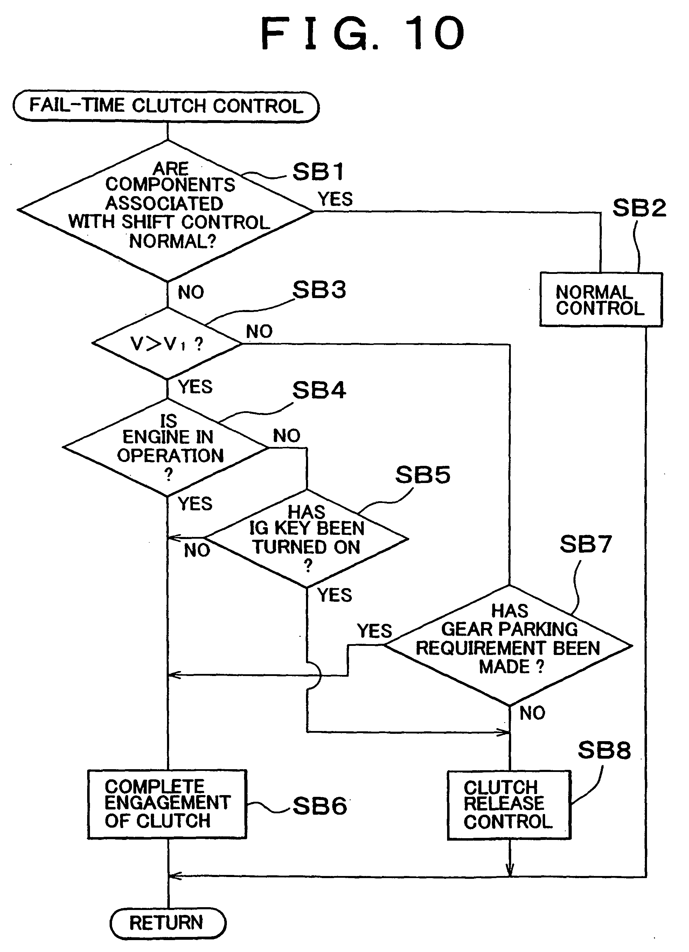

Fig. 10 is a flowchart illustrating the essence of control operation of the transmission electronic control unit 116 according to the second embodiment. In SB1 corresponding to the state determining means 192, it is determined whether or not the shift control device (part) associated with engagement and disengagement of a gear in the transmission 16 is normal. If the result in SB1 is positive, normal control is performed in SB2 and then the present routine is terminated.

However, if the result in SB1 is negative, it is determined in SB3 corresponding to the vehicle speed determining means 200 whether or not the vehicle speed V is higher than a reference value V₁ that has been preset as e.g. about 15km/h. If the result in SB3 is positive, it is determined in SB4 corresponding to the engine operation determining means 204 whether or not the engine 12 is in operation. If the result in SB4 is negative, it is determined in SB5 corresponding to the IG key ON determining means 206 whether or not the ignition key has been turned on. If the result in SB4 is positive, the automatic clutch 14 is engaged in SB6 corresponding to the clutch engagement maintaining means 198 so as to ensure that the vehicle runs smoothly. If the result in SB5 is negative, the automatic clutch 14 is engaged in SB6 corresponding to the clutch engagement maintaining means 198 so as to prevent the vehicle from rolling. If the result in SB5 is positive, the engagement force applied to the automatic clutch 14 is reduced and the automatic clutch 14 is substantially released so as to prevent engine stall and allow the vehicle to be displaced by being pushed by hands.

If the result in SB3 is negative, it is determined in SB7 corresponding to the gear parking requirement determining means 202 whether or not a parking requirement with an engaged gear has been made, by detecting that the shift lever 170 has been moved to the R or S position and that the ignition key has been turned off. If the result in SB7 is positive, engagement of the automatic clutch 14 is maintained in SB6 so as to allow gear parking. However, if the result in SB7 is negative, the automatic clutch 14 is released in SB8 so as to avoid a shock resulting from engine stall.

As described above, according to the second embodiment, in the case where the shift control device of the transmission 16 is not normal, the engagement force applied to the automatic clutch 14 is reduced e.g. even if engagement or disengagement of a gear has become not normal due to a failure in the shift device or the select device. Therefore, engine stall is prevented and displacement during stop of the vehicle is facilitated. Because the engagement force applied to the automatic clutch 14 is reduced based on a running state of the vehicle, i.e., a vehicle speed, an operation state of the engine, an operation state of the ignition key, a gear parking requirement state and the like, the automatic clutch 14 can be released advantageously in accordance with the running state.

In the second embodiment, when the shift control device is not normal, if the vehicle speed V is lower than the predetermined value V₁ and if there is no requirement for gear parking, or if the vehicle speed V is higher than the predetermined value V₁ but if the engine 12 is out of operation and if the ignition key has been turned on, the automatic clutch 14 is released. When the shift control device is not normal, if the vehicle speed V is lower than the predetermined value V₁ and if there is a requirement for gear parking, or if the vehicle speed V is higher than the predetermined value V₁ and if the engine is in operation, or if the vehicle speed V is higher than the predetermined value V₁ with the engine 12 out of operation but if the ignition key has been turned off, engagement of the automatic clutch 14 is maintained. Thus, while ensuring that the vehicle runs smoothly, a shock resulting from engine stall is avoided and the vehicle is allowed to be displaced by being pushed by hands even if the transmission 16 is in a state of an engaged gear.

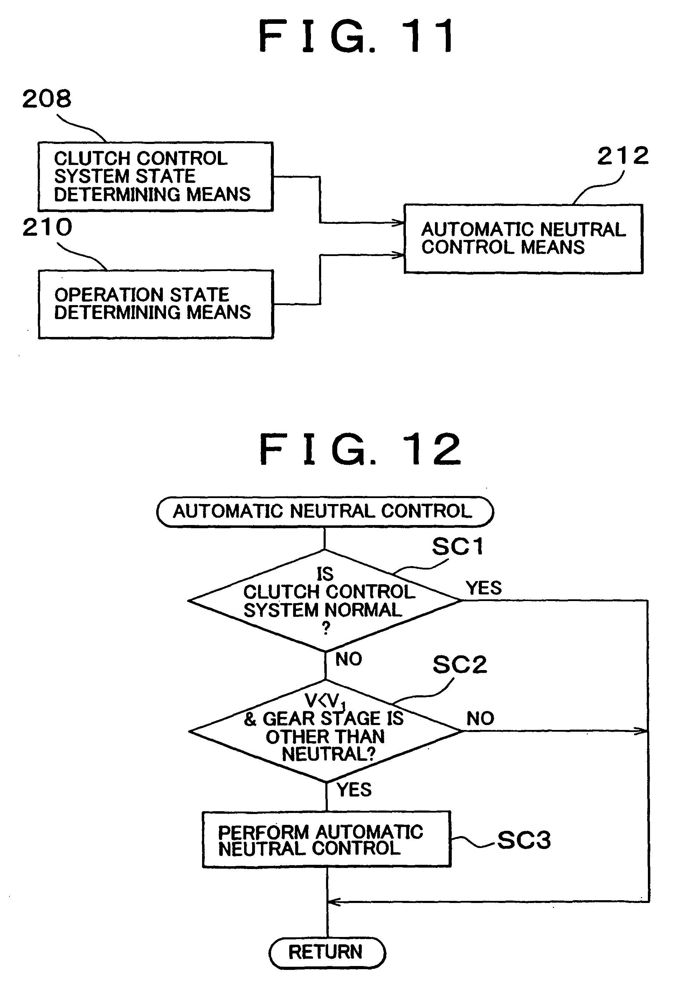

Fig. 11 is a functional block diagram illustrating the essence of control operation of the transmission electronic control unit 116 according to the third embodiment of the invention. If engine stall has occurred during stop of the vehicle or displacement of the vehicle has become impossible due to a not-normal operation of a clutch control system for controlling engagement and release of the automatic clutch 14 provided between the engine 12 and the transmission 16, the transmission electronic control unit 116 of the third embodiment establishes a neutral state of the transmission 16 in a predetermined running state of the vehicle and releases a power transmission path from the engine 12 to the left-front and right-front wheels (driving wheels) 84R, 84L. For this purpose, the transmission electronic control unit 116 has clutch control system state determining means 208, operation state determining means 210, and automatic neutral control means 212.

The clutch control system state determining means 208 determines whether or not at least one of components constituting the clutch control system for controlling engagement and release of the automatic clutch 14, e.g., components of the automatic clutch control device such as the clutch stroke sensor 150, the clutch solenoid valve 98, its driving circuit and the like, or at least one of components other than those of the shift control device is not normal. The operation state determining means 210 determines whether or not the vehicle is running at a low speed equal to or lower than e.g. about 15km/h with the gear stage of the transmission 16 not in the neutral state, i.e., with the transmission 16 in a state of an engaged gear. Namely, the operation state determining means 210 determines whether or not engine stall can be avoided even though the automatic clutch 14 has not been released or the vehicle is in a state where the vehicle can run.

If the clutch control system state determining means 208 determines that at least one of the components constituting the clutch control system for controlling engagement and release of the automatic clutch 14 is not normal and if the operation state determining means 210 determines that the vehicle is running at a low speed with the transmission 16 in a state of an engaged gear, the automatic neutral control means 212 disengages the gear in the transmission 16 and establishes a neutral state, thus preventing engine stall from being caused and allowing the vehicle to be displaced after its stop by being pushed by hands or by being towed.

Fig. 12 is a flowchart illustrating the essence of control operation of the transmission electronic control unit 116 of the third embodiment, i.e., an automatic neutral control routine. In SC1 corresponding to the clutch control system state determining means 208, it is determined whether or not an automatic clutch control device (part) associated with control of engagement and release of the automatic transmission 16 is not normal. If the result in SC1 is negative, the present routine is terminated. However, if the result in SC1 is positive, it is determined in SC2 corresponding to the operation state determining means 210 whether or not the vehicle is running at a low speed with a gear stage other than the neutral stage established in the transmission 16. If the result in SC2 is negative, the present routine is terminated. However, if the result in SC2 is positive, the gear in the transmission 16 is disengaged and the neutral state is established in SC3 corresponding to the automatic neutral control means 212. Thus, engine stall is prevented from being caused and the vehicle is allowed to be displaced after its stop by being pushed by hands or by being towed.

According to the third embodiment, if the automatic clutch control device for controlling engagement and release of the automatic clutch 14 is not normal or if the components of the automatic clutch control device are not normal, the transmission 16 is automatically shifted to the neutral state by the shift control device for the transmission 16, i.e., the shift-select shaft, the select cylinder 76 and the shift cylinder 78 that drive the shift-select shaft, and the like. Therefore, engine stall is prevented and displacement during stop of the vehicle is facilitated.

Further, according to the third embodiment, if the automatic clutch control device is not normal, the transmission 16 is automatically shifted to the neutral state by the shift control device based on a running state of the vehicle. For example, the transmission 16 is automatically shifted to the neutral state by the shift control device based on a running state of the vehicle. Therefore, the transmission 16 is advantageously shifted to the neutral state in a suitable state corresponding to the running state.

Further, when the automatic clutch control device is not normal, if the vehicle speed V is lower than the predetermined value V₁ and if the gear stage of the transmission 16 is not in the neutral state, the transmission 16 is shifted to the neutral state automatically. Thus, it is ensured that the vehicle runs smoothly. Accordingly, a shock resulting from engine stall is avoided advantageously.

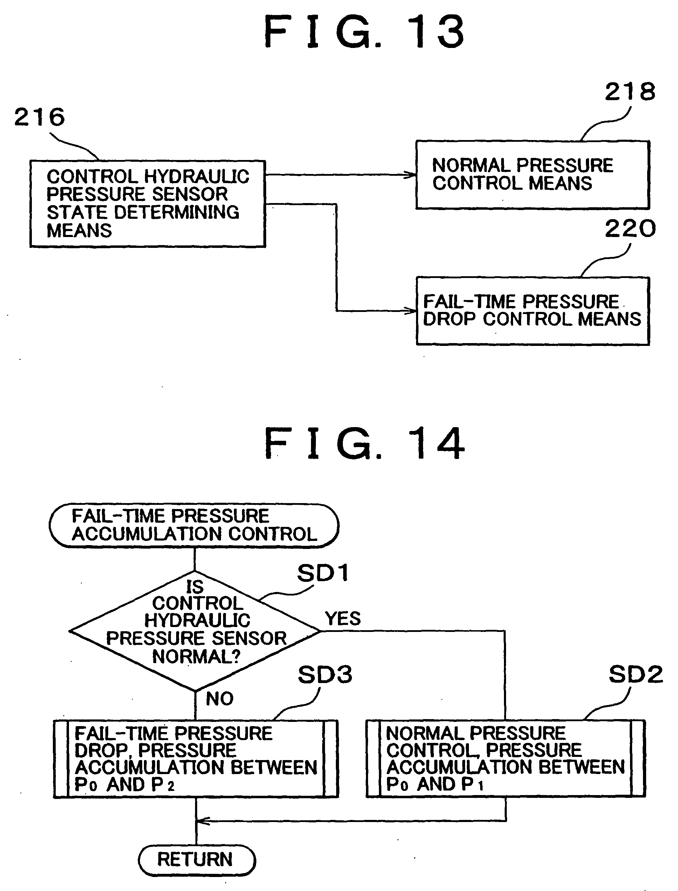

Fig. 13 is a functional block diagram illustrating the essence of control operation of the transmission electronic control unit 116 according to the fourth embodiment of the invention. If the control hydraulic pressure sensor 96 for detecting a gear-change-drive control hydraulic pressure P_{B} that is regulated by the pressure regulating valve 95 in the hydraulic control circuit shown in Fig. 3 is not normal, regulation by the pressure regulating valve 95 becomes impossible. The gear-change-drive control hydraulic pressure P_{B} supplied to the select solenoid valve 102 and the shift solenoid valve 104 that respectively control the select cylinder 76 and the shift cylinder 78 for driving the shift-select shaft (not shown) assumes its maximum value, i.e., the hydraulic pressure P_{A} in the pressure accumulation unit 90. Thus, the shift force increases excessively and threatens to damage one of the shift devices in the transmission 16, e.g., the synchromesh. To avoid such a situation, the transmission electronic control unit 116 of the fourth embodiment makes the pressure P_{A} in the pressure accumulation unit 90 lower than usual and reduces shift load. For this purpose, the transmission electronic control unit 116 has control hydraulic pressure sensor state determining means 216, normal pressure control means 218, and fail-time pressure drop control means 220.

If the hydraulic pressure P_{A} in the pressure accumulation unit 90 detected by the original pressure sensor 92 drops below a preset lower limit value P₀, the normal pressure control means 218 activates the hydraulic pump 94. If the hydraulic pressure P_{A} rises above a preset upper limit value P₁, the normal pressure control means 218 stops the hydraulic pump 94. Thereby the hydraulic pressure P_{A} in the pressure accumulation unit 90 is maintained between the lower limit value P₀ and the upper limit value P₁. If the hydraulic pressure P_{A} in the pressure accumulation unit 90 rises above an upper limit value P₂ that has been set as a pressure lower than the upper limit value P₁, the fail-time pressure drop control means 220 stops the hydraulic pump 94. If the hydraulic pressure P_{A} drops below the lower limit value P₀, the fail-time pressure drop control means 220 activates the hydraulic pump 94. Thereby the hydraulic pressure P_{A} in the pressure accumulation unit 90 is maintained between the lower limit value P₀ and the upper limit value P₂. Based on signals from a state determining circuit (not shown) and the like, the control hydraulic pressure sensor state determining means 216 determines whether or not the control hydraulic pressure sensor 96 has become not normal due to breaking of wire, short-circuiting, degradation of properties or the like. If the control hydraulic pressure sensor 96 is normal, the control hydraulic pressure sensor state determining means 216 causes the normal pressure control means 218 to control the hydraulic pressure P_{A} in the pressure accumulation unit 90. If the control hydraulic pressure sensor 96 is not normal, the control hydraulic pressure sensor state determining means 216 causes the fail-time pressure drop control means 220 to control the hydraulic pressure P_{A} in the pressure accumulation unit 90. Thereby the maximum value of the hydraulic pressure P_{A} in the pressure accumulation unit 90 is lowered. Thus, if the control hydraulic pressure sensor 96 is not normal, the control hydraulic pressure P_{B} is lowered as indicated by a broken line shown in Fig. 4 and the shift load is reduced. In the case where this control is not performed, the control hydraulic pressure P_{B} is maintained at a high pressure as indicated by an alternate long and short dash line shown in Fig. 4 and an excessive shift load is applied.

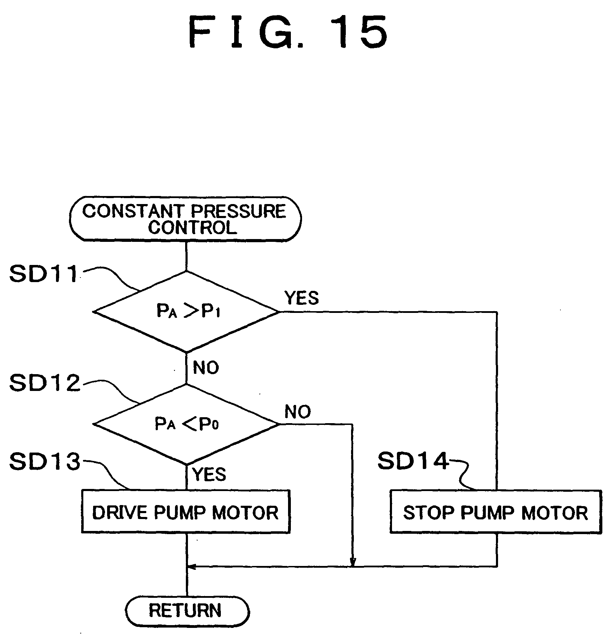

Figs. 14 and 15 are flowcharts illustrating the essence of control operation of the transmission electronic control unit 116 of the fourth embodiment, i.e., a fail-time pressure drop control routine and a constant pressure control routine respectively. In Fig. 14, it is determined in SD1 corresponding to the control hydraulic pressure sensor state determining means 216 whether or not the control hydraulic pressure sensor 96 is normal. If the result in SD1 is positive, the constant pressure control routine shown in Fig. 15 is performed in SD2 corresponding to the normal pressure control means 218, whereby the pressure P_{A} in the pressure accumulation unit 90 is maintained between the lower limit value P₀ and the upper limit value P₁. However, if the result in SD1 is negative, fail-time pressure drop control is performed in SD3 corresponding to the fail-time pressure drop control means 220, whereby the pressure P_{A} in the pressure accumulation unit 90 is maintained between the lower limit value P₀ and the upper limit value P₂. Also during fail-time pressure accumulation control, constant pressure maintaining control shown in Fig. 15 is performed with the upper limit value P₁ in SD11 replaced by the upper limit value P₂ that is lower than the upper limit value P₁.

According to the fourth embodiment, if the control hydraulic pressure sensor 96 for detecting the control hydraulic pressure P_{B} for driving the automatic gear-change control device that sets a discharge pressure of the hydraulic pump 94 as the original pressure is not normal, the original pressure P_{A} is reduced automatically. Therefore, the controllability of the automatic gear-change control device is inhibited from being degraded due to a rise in pressure resulting from the incapability to control the control hydraulic pressure P_{B}, and application of an excessive shift load is prevented. For example, the transmission 16 is suitably prevented from being damaged due to an excessive increase in shift operation force or select operation force.

Further, according to the fourth embodiment, the pressure accumulation unit 90 accumulating a discharge pressure of the hydraulic pump 94, the original pressure sensor 92 detecting the pressure P_{A} in the pressure accumulation unit 90, and the normal pressure control means 218 that stops the hydraulic pump 94 if the pressure P_{A} detected by the original pressure sensor 92 rises above the predetermined upper limit value P₁ but that activates the hydraulic pump 94 if the pressure P_{A} drops below the predetermined lower limit value P₀ are provided. On the other hand, if the control hydraulic pressure sensor 96 is not normal, the control unit for the vehicular transmission performs pressure accumulation by means of the fail-time pressure drop control means 220 having the upper limit value P₂ that has replaced the upper limit value P₁ of the pressure control means 218 and that is lower than the upper limit value P₁. Thus, the pressure P_{A} in the pressure accumulation unit 90, i.e., the original control hydraulic pressure for driving the automatic gear-change control device is reduced suitably. Therefore, the transmission is suitably prevented from being damaged due to an excessive increase in shift operation force or select operation force.

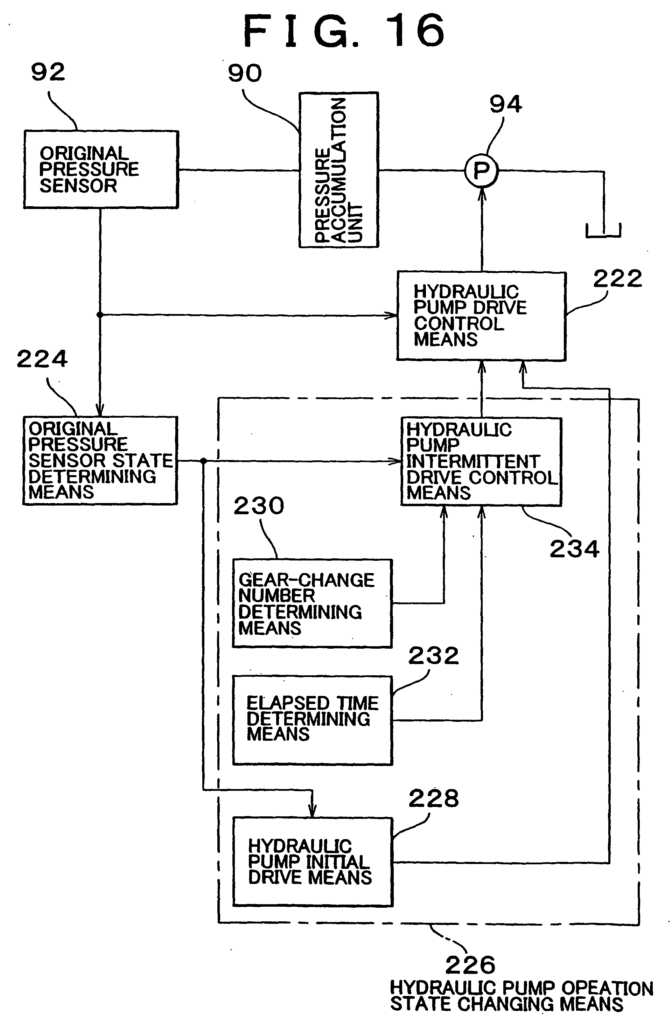

Fig. 16 is a functional block diagram illustrating the essence of control operation of the transmission electronic control unit 116 according to the fifth embodiment of the invention. If the original pressure sensor 92 for detecting the pressure P_{A} in the pressure accumulation unit 90 is not normal, the pressure P_{A} in the pressure accumulation unit 90 cannot be defined, and the original gear-change-drive control hydraulic pressure P_{B} supplied to the select solenoid valve 102 and the shift solenoid valve 104 that respectively control the select cylinder 76 and the shift cylinder 78 for driving the shift-select shaft (not shown) cannot be controlled. To avoid such a situation, the transmission electronic control unit 116 of the fifth embodiment causes the hydraulic pump 94 to supply the pressure accumulation unit 90 with hydraulic fluid in accordance with an amount of consumption of hydraulic fluid in the pressure accumulation unit 90 and thus maintains the hydraulic pressure P_{A} in the pressure accumulation unit 90 at a suitable pressure. For this purpose, the transmission electronic control unit 116 has hydraulic pump drive control means 222, original pressure sensor state determining means 224, and hydraulic pressure operation state changing means 226.

If the hydraulic pressure P_{A} in the pressure accumulation unit 90 detected by the original pressure sensor 92 rises above the predetermined upper limit value P₁, the hydraulic pump drive control means 222 stops the hydraulic pump 94. If the hydraulic pressure P_{A} drops below the predetermined lower limit value P₀, the hydraulic pump drive control means 222 activates the hydraulic pump 94. Thereby the hydraulic pressure P_{A} in the pressure accumulation unit 90 is maintained between the lower limit value P₀ and the upper limit value P₁. Based on signals from a state determining circuit (not shown), the original pressure sensor state determining means 224 determines whether or not the original pressure sensor 92 has become not normal due to breaking of wire, short-circuiting, degradation of properties or the like. If the original pressure sensor state determining means 224 determines that the original pressure sensor 92 is not normal, the hydraulic pump operation state changing means 226 changes, based on a gear-change number n_{SH} and an elapsed time t_{EL}, an operation state of the hydraulic pump 94 driven by the hydraulic pump drive control means 222 from an operation state where the hydraulic pressure P_{A} in the pressure accumulation unit 90 is maintained within a predetermined range, so that hydraulic fluid corresponding to an amount of consumption of hydraulic fluid in the pressure accumulation unit 90 is supplied from the hydraulic pump 94. That is, the operation state is changed such that the hydraulic pressure P_{A} in the pressure accumulation unit 90 is maintained without employing the original pressure sensor 92 although precision is insufficient.

The hydraulic pump operation state changing means 226 has hydraulic pump initial drive means 228, gear-change number determining means 230, elapsed time determining means 232, and hydraulic pump intermittent drive control means 234. If the original pressure sensor state determining means 224 determines that the original pressure sensor 92 is not normal, the hydraulic pump initial drive means 228 drives the hydraulic pump 94 for a certain time T₁, thus increasing the hydraulic pressure P_{A} in the pressure accumulation unit 90 by a predetermined pressure before intermittently driving the hydraulic pump 94. The gear-change number determining means 230 determines whether or not the gear-change number n_{SH} of the transmission 16 has exceeded a predetermined number N. The elapsed time determining means 232 determines whether or not the elapsed time t_{EL} after completion of last driving of the hydraulic pump has exceeded a predetermined time T₃. If the gear-change number determining means 230 determines that the gear-change number n_{SH} of the transmission 16 has exceeded the predetermined number N or if the elapsed time determining means 232 determines that the elapsed time T_{EL} after completion of last driving of the hydraulic pump has exceeded the predetermined time T₃, hydraulic pump intermittent drive control means 234 drives the hydraulic pump 94 for a certain time T₂, thus increasing the hydraulic pressure P_{A} in the pressure accumulation unit 90 by a predetermined pressure. The time T₁ is set such that the pressure accumulation unit 90 is supplied in advance with hydraulic fluid of an amount equal to or greater than an amount of consumption of the pressure accumulation unit 90 if gear-change of the transmission 16 has been performed N times or if the time T₃ has elapsed after completion of last driving of the hydraulic pump and that the hydraulic pressure P_{A} in the pressure accumulation unit 90 does not drop below the lower limit value P₀. The time T₂ has been calculated in advance such that the pressure accumulation unit 90 is supplied with hydraulic fluid of an amount corresponding to an amount of consumption of the pressure accumulation unit 90 if gear-change of the transmission 16 has been performed N times or if the time T₃ has elapsed after completion of last driving of the hydraulic pump.

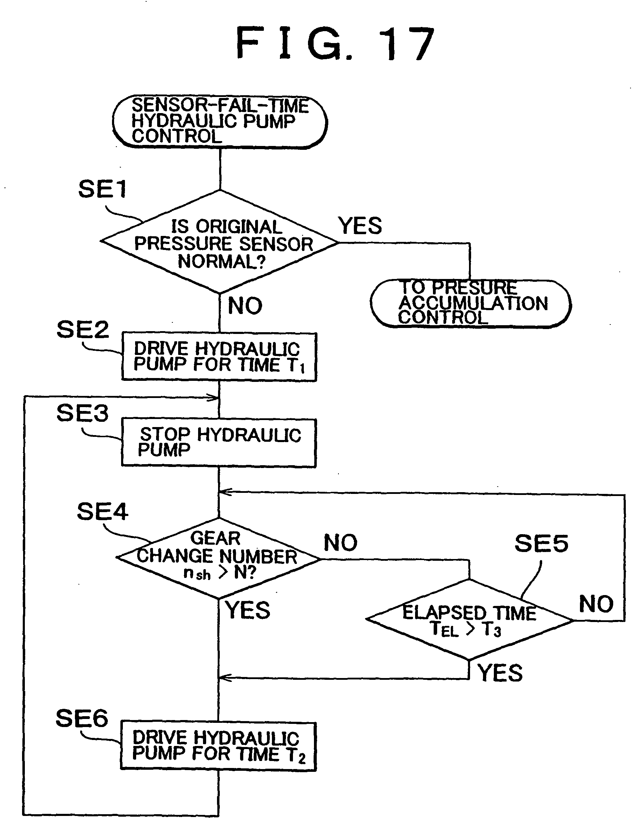

Fig. 17 is a flowchart illustrating the essence of control operation of the transmission electronic control unit 116 of the fifth embodiment, i.e., a sensor-fail-time hydraulic pump control routine. In Fig. 17, it is determined in SE1 corresponding to the original pressure sensor state determining means 224 whether or not the original pressure sensor 92 is normal. If the result in SE1 is positive, other control routines such as the pressure accumulation control routine are executed. If the result in SE1 is negative, the hydraulic pump 94 is driven for the time T₁ in SE2 corresponding to the hydraulic pump initial drive means 228, so that the hydraulic pressure P_{A} in the pressure accumulation unit 90 is increased by a predetermined pressure before the hydraulic pump 94 is driven intermittently. Next, the hydraulic pump 94 is stopped in SE3. Then, it is determined in SE4 corresponding to the gear-change number determining means 230 whether or not the gear-change number n_{SH} of the transmission 16 has exceeded the predetermined number N. If the result in SE4 is negative, it is determined in SE5 corresponding to the elapsed time determining means 232 whether or not the elapsed time t_{EL} after completion of last driving of the hydraulic pump has exceeded the predetermined time T₃. If the results in SE4 and SE5 are both negative, SE4 and the following steps are repeated. However, if one of the results in SE4 and SE5 is positive, the hydraulic pump 94 is driven for the time T₂ in SE6. By repeating SE3 to SE6, the hydraulic pump 94 is operated intermittently.

According to the fifth embodiment, if the original pressure sensor 92 for detecting the hydraulic pressure P_{A} in the pressure accumulation unit 90, i.e., the original control hydraulic pressure P_{B} for driving the automatic gear-change control device including the select cylinder 76 and the shift cylinder 78 is not normal, the hydraulic pump operation sate changing means 226 (SE2 to SE6) changes the operation state of the hydraulic pump 94. Thus, even if the original pressure P_{A} has not been detected and is unknown, it is guaranteed automatically so that automatic gear-change of the transmission 16 can be performed continuously.

Further, according to the fifth embodiment, the hydraulic pump operation state changing means 226 changes, based on an amount of consumption of hydraulic fluid at the original pressure P_{A}, the operation state of the hydraulic pump 94 into an intermittent operation state where the hydraulic pump 94 is operated for the predetermined time T₂ that has been set so as to compensate for the amount of consumption. Thus, based on the amount of consumption of hydraulic fluid at the original pressure P_{A}, the hydraulic pump 94 is operated for the predetermined time T₂ that has been set so as to compensate for the amount of consumption. Therefore, the original pressure is maintained according to necessity and to a sufficient degree.

Further, according to the fifth embodiment, the original pressure sensor state determining means 224 that determines whether or not the original pressure sensor 92 for detecting the original pressure P_{A} of the gear-change-drive control hydraulic pressure P_{B} is not normal is provided. The hydraulic pump operation state changing means 226 includes the hydraulic pump initial drive means 228 (SE2), the gear-change number determining means 230 (SE4), the elapsed time determining means 232 (SE5), and the hydraulic pump intermittent drive control means 234 (SE6 and the like). If the original pressure sensor state determining means 224 determines that the original pressure sensor is not normal, the hydraulic pump initial drive means 228 (SE2) operates the hydraulic pump 94 for the predetermined time T₁ by priority. The gear-change number determining means 230 (SE4) determines whether or not the gear-change number n_{SH} of the transmission 16 has exceeded the predetermined number N. The elapsed time determining means 232 (SE5) determines whether or not the elapsed time t_{EL} after completion of driving of the hydraulic pump has exceeded the predetermined value T₃. The hydraulic pump intermittent drive control means 234 (SE6 and the like) operates the hydraulic pump 94 for the predetermined time T₂ if the gear-change number determining means 230 determines that the gear-change number n_{SH} of the transmission 16 has exceeded the predetermined number N or if the elapsed time determining means 232 determines that the elapsed time t_{EL} after completion of driving of the hydraulic pump has exceeded the predetermined value T₃. Thus, based on an amount of consumption of hydraulic fluid at the original pressure P_{A}, the hydraulic pump 94 is operated intermittently for the predetermined time T₂ that has been set so as to compensate for the amount of consumption. Therefore, the original pressure is maintained according to necessity and to a sufficient degree.

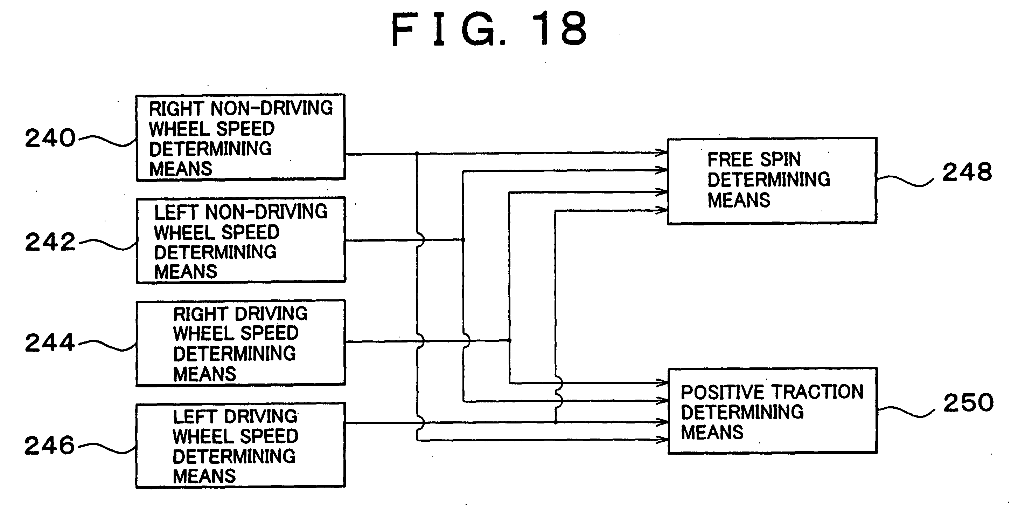

Fig. 18 is a functional block diagram illustrating the essence of control operation of the transmission electronic control unit 116 according to the sixth embodiment of the invention. In a free spin (no traction) state where at least one of wheels of the vehicle rotates idly, or in a chassis-dynamometer running state where rear-left and rear-right wheels (non-driving wheels) (not shown) or front-left and front-right wheels (non-driving wheels) (not shown) are stopped on a floor and where front-left and front-right wheels (driving wheels) or rear-left and rear-right wheels (driving wheels) 84R, 84L are caused to rotate on a roller to conduct a driving test of the vehicle, it may be erroneously determined, based on wheel speeds calculated from rotational speeds of the wheels, that wheel speed sensors 152 provided in the wheels respectively are not normal. To avoid such a situation, the transmission electronic control unit 116 of the sixth embodiment detects a free spin state or a chassis-dynamometer running state in advance. For this purpose, the transmission electronic control unit 116 has right non-driving wheel speed determining means 240, left non-driving wheel speed determining means 242, right driving wheel speed determining means 244, left driving wheel speed determining means 246, free spin determining means 248, and positive traction determining means,250.

The right non-driving wheel speed determining means 240 determines whether or not a wheel speed V_{W1} of the rear-right wheel (the right non-driving wheel) or the front-right wheel (the right non-driving wheel) calculated based on a signal from the wheel speed sensor 152 provided in the rear-right wheel (the right non-driving wheel) or the front-right wheel (the right non-driving wheel) is lower than a preset reference value V₁. The left non-driving wheel speed determining means 242 determines whether or not a wheel speed V_{W2} of the rear-left wheel (the left non-driving wheel) or the front-left wheel (the left non-driving wheel) calculated based on a signal from the wheel speed sensor 152 provided in the rear-left wheel (the left non-driving wheel) or the front-left wheel (the left non-driving wheel) is lower than a preset reference value V₂. The right driving wheel speed determining means 244 determines whether or not a wheel speed V_{W3} of the front-right wheel (the right driving wheel) or the rear-right wheel (the right driving wheel) calculated based on a signal from the wheel speed sensor 152 provided in the front-right wheel (the right driving wheel) or the rear-right wheel (the right driving wheel) is higher than a preset reference value V₃. The left driving wheel speed determining means 246 determines whether or not a wheel speed V_{W4} of the front-left wheel (the left driving wheel) or the rear-left wheel (the left driving wheel) calculated based on a signal from the wheel speed sensor 152 provided in the front-left wheel (the left driving wheel) or the rear-left wheel (the left driving wheel) is higher than a preset reference value V₄. The reference values V₁, V₂, V₃ and V₄ have been set to confirm that the wheels are in rotation and may be equal to one another.

If it is determined that the wheel speed V_{W1} of the rear-right wheel (the right non-driving wheel) or the front-right wheel (the right non-driving wheel) is lower than the reference value V₁, that the wheel speed V_{W2} of the rear-left wheel (the left non-driving wheel) or the front-left wheel (the left non-driving wheel) is lower than the reference value V₂, and that the wheel speed V_{W3} of the front-right wheel (the right driving wheel) or the rear-right wheel (the right driving wheel) is higher than the reference value V₃ or that the wheel speed sensor V_{W4} of the front-left wheel (the left driving wheel) or the rear-left wheel (the left driving wheel) is higher than the reference value V₄, the free spin determining means 248 determines that the vehicle is in a free spin state or in a chassis-dynamometer running state. If it is determined that the wheel speed V_{W1} of the rear-right wheel (the right non-driving wheel) or the front-right wheel (the right non-driving wheel) is higher than the reference value V₁ or that the wheel speed V_{W2} of the rear-left wheel (the left non-driving wheel) or the front-left wheel (the left non-driving wheel) is higher than the reference value V₂, or that the wheel speed V_{W3} of the front-right wheel (the right driving wheel) or the rear-right wheel (the right driving wheel) is lower than the reference value V₃ and that the wheel speed sensor V_{W4} of the front-left wheel (the left driving wheel) or the rear-left wheel (the left driving wheel) is lower than the reference value V₄, the positive traction determining means 250 determines that the vehicle is neither in a free spin state nor in a chassis-dynamometer running state.

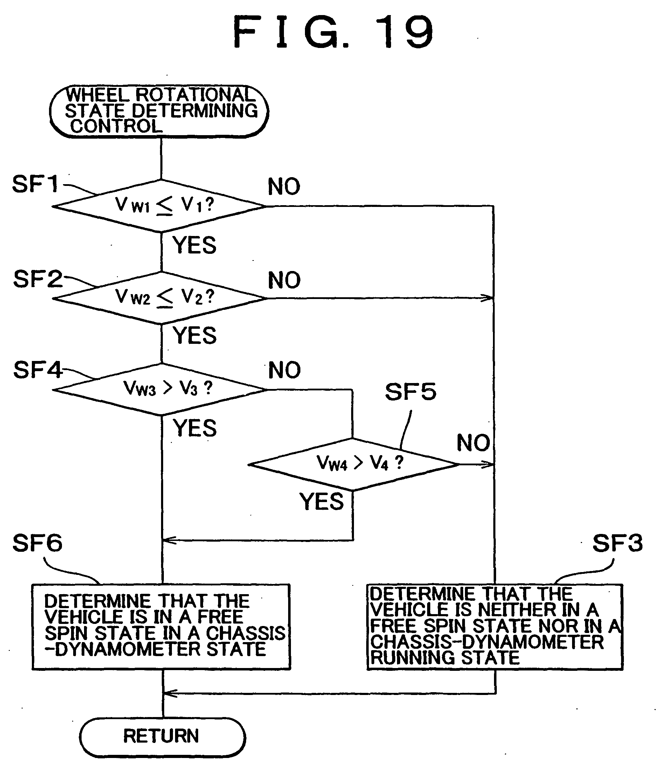

Fig. 19 is a flowchart illustrating the essence of control operation of the transmission electronic control unit 116 of the sixth embodiment, i.e., a wheel rotation state determining control routine. In Fig. 19, it is determined in SF1 corresponding to the right non-driving wheel speed determining means 240 whether or not the wheel speed V_{W1} of the rear-right wheel (the right non-driving wheel) or the front-right wheel (the right non-driving wheel) calculated based on a signal from the wheel speed sensor 152 provided in the rear-right wheel (the right non-driving wheel) or the front-right wheel (the right non-driving wheel) is lower than the preset reference value V₁. If the result in SF1 is positive, it is determined in SF2 corresponding to the left non-driving wheel speed determining means 242 whether or not the wheel speed V_{W2} of the rear-left wheel (the left non-driving wheel) or the front-left wheel (the left non-driving wheel) calculated based on a signal from the wheel speed sensor 152 provided in the rear-left wheel (the left non-driving wheel) or the front-left wheel (the left non-driving wheel) is lower than the preset reference value V₂. If the result in SF2 is positive, it is determined in SF4 corresponding to the right driving wheel speed determining means 244 whether or not the wheel speed V_{W3} of the front-right wheel (the right driving wheel) or the rear-right wheel (the right driving wheel) calculated based on a signal from the wheel speed sensor 152 provided in the front-right wheel (the right driving wheel) or the rear-right wheel (the right driving wheel) is higher than the preset reference value V₃. If the result in SF4 is negative, it is determined in SF5 corresponding to the left driving wheel speed determining means 246 whether or not the wheel speed V_{W4} of the front-left wheel (the left driving wheel) or the rear-left wheel (the left driving wheel) calculated based on a signal from the wheel speed sensor 152 provided in the front-left wheel (the left driving wheel) or the rear-left wheel (the left driving wheel) is higher than the preset reference value V₄.

If one of the results in SF1, SF2 and SF5 is negative, it is determined in SF3 corresponding to the positive traction determining means 250 that the vehicle is neither in a free spin state nor in a chassis-dynamometer running state. However, if one of the results in SF4 and SF5 is positive, it is determined in SF6 corresponding to the free spin determining means 248 that the vehicle is in a free spin state or in a chassis-dynamometer running state. That is, if at least either the front-left and front-right wheels (driving wheels) or the rear-left and rear-right wheels (driving wheels) 84L, 84R are in rotation although the rear-left and rear-right wheels (non-driving wheels) or the front-left and front-right wheels (non-driving wheels) are substantially stopped from rotating, it is determined that the vehicle is in a free spin state or in a chassis-dynamometer running state.

According to the sixth embodiment, the free spin determining means 248 (SF6) determines, based on the wheel speeds V_{W1}, V_{W2}, V_{W3} and V_{W4} of the vehicle, that the vehicle is in a free spin state or in a chassis-dynamometer running state. Therefore, the possibility of erroneously determining that the wheel speed sensors 152 provided in the wheels respectively are not normal on the ground that the non-driving wheels have been stopped while the driving wheels are in rotation is eliminated.

The inventive control device for a vehicular transmission 16 has, for example, a clutch release cylinder 34, a select cylinder 76, a shift cylinder 78, input-signal-type elements and output-signal-type elements for electric control of those components, and the like. When any one in the control device is not normal, gear-change is prohibited automatically if the vehicle is running. Accordingly, gear-change is prevented from being performed against the intention of a driver while the vehicle is running, so that security is enhanced. Gear-change is permitted automatically after the vehicle has been stopped, whereby the vehicle is allowed to restart quickly.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the scope of the invention of the appended claims.

A control device for a vehicular transmission (16) has, for example, a clutch release cylinder (34), a select cylinder (76), a shift cylinder (78), input-signal-type elements and output-signal-type elements for electric control of those components, and the like. When any one in the control device is not normal, gear-change is prohibited automatically if the vehicle is running. Accordingly, gear-change is prevented from being performed against the intention of a driver while the vehicle is running, so that security is enhanced. Gear-change is permitted automatically after the vehicle has been stopped, whereby the vehicle is allowed to restart quickly.

## Claims

1. A transmission (16) for a vehicle which is provided in a power transmission path extending from a prime mover (12) to driving wheels (84L, 84R), and which is connectable to said prime mover (12) by exclusively using an automatically actuable clutch (14), comprising:
a control device for automatically controlling gear-change of said transmission (16); and
state determining means (180; 192; 208; 216; 224) for determining an abnormal condition of said control device (34, 76, 78),
**characterized in that**
said control device (34, 76, 78, 116) starts a fail-safe operation, when said state determining means (180; 192; 208; 216; 224) detects an abnormal condition of said control device (34, 76, 78), which enables at least a restricted automatic driving operation, wherein the control device (116) determines that the vehicle is not in a normal running state if a rotational speed (V_{W1}) of a right non-driving wheel is lower than a first reference value (V₁), if a rotational speed (V_{W2}) of a left non-driving wheel is lower than a second reference value (V₂), and if a rotational speed (V_{W3}) of a right driving wheel (84R) is higher than a third reference value (V₃) or if a rotational speed (V_{W4}) of a left driving wheel (84L) is higher than a fourth reference value (V₄).

2. A method of controlling a transmission (16) for a vehicle which is provided in a power transmission path extending form a prime mover (12) to driving wheels (84L, 84R), and which is connectable to said prime mover (12) by exclusively using an automatically actuable clutch (14), comprising the steps of automatically controlling gear-change of the transmission (16), wherein the method further comprises the steps of:
detecting an abnormal condition of a control device of said transmission (16),
starting a fail-safe operation of the transmission (16), when an abnormal condition of said control device is detected, which enables at least a restricted automatic driving operation, wherein
the control device (116) determines that the vehicle is not in a normal running state if a rotational speed (V_{W1}) of a right non-driving wheel is lower than a first reference value (V₁), if a rotational speed (V_{W2}) of a left non-driving wheel is lower than a second reference value (V₂), and if a rotational speed (V_{W3}) of a right driving wheel (84R) is higher than a third reference value (V₃) or if a rotational speed (V_{W4}) of a left driving wheel (84L) is higher than a fourth reference value (V₄).

## Patentansprüche

1. Ein Fahrzeuggetriebe (16), das in einem Antriebsstrang vorgesehen ist, der sich von einer Primär-Antriebsvorrichtung (12) zu Antriebsrädern (84L, 84R) erstreckt, und das an diese Primär-Antriebsvorrichtung (12) ausschließlich durch Nutzung einer automatisch bedienbaren Kupplung (14) angeschlossen werden kann, das Folgendes umfasst:
eine Steuerungsvorrichtung zur automatischen Steuerung des Gangwechsels dieses Fahrzeuggetriebes (16); und
eine Zustandsfeststellungsvorrichtung (180; 192; 208; 216; 224) zum Feststellen eines unnormalen Zustands dieser Steuerungsvorrichtung (34, 76, 78),
**dadurch gekennzeichnet, dass**
die Steuerungsvorrichtung (34, 76, 78, 116) einen Ausfallsicherungsbetrieb startet, wenn diese Zustandsfeststellungsvorrichtung (180; 192; 208; 216; 224) einen unnormalen Zustand dieser Steuerungsvorrichtung (34, 76, 78) erkennt, wodurch mindestens ein eingeschränkter automatischer Fahrbetrieb ermöglicht wird, wobei die Steuerungsvorrichtung (116) bestimmt, dass das Fahrzeug nicht in einem normal fahrenden Zustand ist, wenn eine Drehzahl (V_{W1}) eines rechten Nicht-Antriebsrads geringer ist als ein erster Referenzwert (V₁), wenn eine Drehzahl (V_{W2}) eines linken Nicht-Antriebsrads geringer ist als ein zweiter Referenzwert (V₂) und wenn eine Drehzahl (V_{W3}) eines rechten Antriebsrads (84R) höher ist als ein dritter Referenzwert (V₃) oder wenn eine Drehzahl (V_{W4}) eines linken Antriebsrads (84L) höher ist als ein vierter Referenzwert (V₄).

2. Ein Verfahren zur Steuerung eines Fahrzeuggetriebes (16), das in einem Antriebsstrang vorgesehen ist, der sich von einer Primär-Antriebsvorrichtung (12) zu Antriebsrädern (84L, 84R) erstreckt, und das an diese Primär-Antriebsvorrichtung (12) ausschließlich durch Nutzung einer automatisch bedienbaren Kupplung (14) angeschlossen werden kann, das die Schritte zur automatischen Steuerung des Gangwechsels des Fahrzeuggetriebes (16) umfasst, wobei das Verfahren darüber hinaus die folgenden Schritte umfasst:
Erkennen eines unnormalen Zustands einer Steuerungsvorrichtung dieses Fahrzeuggetriebes (16),
Starten eines Ausfallsicherungsbetriebs des Fahrzeuggetriebes (16), wenn ein unnormaler Zustand dieser Steuerungsvorrichtung erkannt wird, wodurch mindestens ein eingeschränkter automatischer Fahrbetrieb ermöglicht wird, wobei
die Steuerungsvorrichtung (116) bestimmt, dass das Fahrzeug nicht in einem normal fahrenden Zustand ist, wenn eine Drehzahl (V_{W1}) eines rechten Nicht-Antriebsrads geringer ist als ein erster Referenzwert (V₁), wenn eine Drehzahl (V_{W2}) eines linken Nicht-Antriebsrads geringer ist als ein zweiter Referenzwert (V₂) und wenn eine Drehzahl (V_{W3}) eines rechten Antriebsrads (84R) höher ist als ein dritter Referenzwert (V₃) oder wenn eine Drehzahl (V_{W4}) eines linken Antriebsrads (84L) höher ist als ein vierter Referenzwert (V₄).

## Revendications

1. Transmission (16) pour un véhicule qui est prévue sur un trajet de transmission de puissance s'étendant d'un moteur premier (12) à des roues motrices (84L, 84R) et que l'on peut relier audit moteur premier (12), en utilisant exclusivement un embrayage (14) actionnable automatiquement, comprenant :
un dispositif de commande pour commander automatiquement le changement de vitesse de ladite transmission (16) ; et
un moyen de détermination d'état (180 ; 192 ; 208 ; 216 ; 224), destiné à déterminer une condition anormale dudit dispositif de commande (34, 76, 78),
**caractérisé en ce que**
dans laquelle ledit dispositif de commande (34, 76, 78, 116) démarre un fonctionnement à sécurité intégrée, lorsque ledit moyen de détermination d'état (180 ; 192 ; 208 ; 216 ; 224) détecte une condition anormale dudit dispositif de commande (34, 76, 78), lequel fonctionnement permet au moins un fonctionnement en conduite automatique restreinte, dans lequel le dispositif de commande (116) détermine que le véhicule n'est pas dans un état de fonctionnement normal si une vitesse de rotation (V_{W1}) d'une roue droite non-motrice est inférieure à une première valeur de référence (V₁), si une vitesse de rotation (V_{W2}) d'une roue gauche non-motrice est inférieure à une seconde valeur de référence (V₂), et si une vitesse de rotation (V_{W3}) d'une roue droite motrice (84R) est supérieure à une troisième valeur de référence (V₃) ou si une vitesse de rotation (V_{W4}) d'une roue gauche motrice (84L) est supérieure à une quatrième valeur de référence (V₄).

2. Procédé pour commander une transmission (16) pour un véhicule qui est prévue sur un trajet de transmission de puissance s'étendant d'un moteur premier (12) à des roues motrices (84L, 84R) et que l'on peut relier audit moteur premier (12), en utilisant exclusivement un embrayage (14) actionnable automatiquement, comprenant les étapes consistant à commander automatiquement un changement de vitesse de la transmission, dans lequel le procédé comprend en outre, les étapes consistant à :
détecter une condition anormale d'un dispositif de commande de ladite transmission (16),
démarrer un fonctionnement à sécurité intégrée de la transmission (16), lorsqu'une condition anormale dudit dispositif de commande est détectée, lequel fonctionnement permet au moins une opération de conduite automatique restreinte, dans laquelle
le dispositif de commande (116) détermine que le véhicule n'est pas dans un état de fonctionnement normal si une vitesse de rotation (V_{W1}) d'une roue droite non-motrice est inférieure à une première valeur de référence (V₁), si une vitesse de rotation (V_{W2}) d'une roue gauche non-motrice est inférieure à une seconde valeur de référence (V₂), et si une vitesse de rotation (V_{W3}) d'une roue droite motrice (84R) est supérieure à une troisième valeur de référence (V₃) ou si une vitesse de rotation (V_{W4}) d'une roue gauche motrice (84L) est supérieure à une quatrième valeur de référence (V₄).
